(19) Europäisches Patentamt
European Patent Office
Office européen des brevets

(11) **EP 3 909 793 A1**

(12) **EUROPEAN PATENT APPLICATION**

(43) Date of publication:
**17.11.2021 Bulletin 2021/46**

(51) Int Cl.:
**B60C 23/04** *(2006.01)*   **B60C 23/06** *(2006.01)*

(21) Application number: **21173314.2**

(22) Date of filing: **11.05.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2020 JP 2020085386**

(71) Applicant: **TDK Corporation**
**Tokyo 103-6128 (JP)**

(72) Inventors:
• **SENRIUCHI, Tadao**
**Tokyo, 103-6128 (JP)**
• **YONEDA, Sadaharu**
**Tokyo, 103-6128 (JP)**

(74) Representative: **Epping - Hermann - Fischer**
**Patentanwaltsgesellschaft mbH**
**Schloßschmidstraße 5**
**80639 München (DE)**

(54)   **TIRE ATTACHING POSITION DETECTION SYSTEM, TIRE AND SENSOR UNIT FOR TIRES**

(57)    A tire attaching position detection system is provided which can suppress influence by an intensity of a reception signal from a tire. In the system, a sensor unit is mounted on each tire, the sensor unit has a geomagnetic sensor for acquiring data on direction change of the tire, a distortion sensor for acquiring data on number of rotations of the tire and a transmitting part for transmitting the direction change data and number of rotations data of the tire. A calculation part of a user terminal judges the attaching position of each tire based on the direction change data and the number of rotations data of each tire transmitted from the transmitting part.

FIG. 1

1 Tire attaching position detection system

**Description**

TECHNICAL FIELD

The present invention relates to a tire attaching position detection system for vehicles, a tire and a sensor unit for tires.

BACKGROUND ART

As a system for monitoring an air pressure of each tire attached to a vehicle, there is known TPMS (Tire Pressure Monitoring System) . In the TPMS, an air pressure sensor unit mounted on each tire transmits a detection result together with tire ID to a receiver on a car body side by wireless communication. A computer on the car body side displays a warning on a screen etc. for a driver when a content received by the receiver indicates a reduction in the air pressure of the tire. To specify which tire the reduction in air pressure occurs, the computer on the car body side must recognize the position of each tire, that is, which tire of each ID is attached to the front left, front right, rear left or rear right wheel.

Patent Document 1 below discloses a tire pressure monitoring system. This system has air pressure sensor units equipped with a wireless transmitter, each provided on each tire, and a controller having a receiver. The receiver is installed in such a manner that its distance from each air pressure sensor unit is different. Each air pressure sensor unit transmits the tire ID and the detection result of the air pressure by wireless to the receiver. The controller compares intensities of reception signals from the air pressure sensor units in the receiver to specify the attaching position of each tire.

PRIOR ART DOCUMENT

[PATENT DOCUMENT]

[Patent Document 1] Japanese Laid-Open Patent Publication No. 2008-049875

[SUMMARY OF THE INVENTION]

[PROBLEM TO BE SOLVED BY THE INVENTION]

In the system of Patent Document 1, it is assumed that, in fact, the intensity of the reception signal of the receiver depends on not only a distance from each air pressure sensor unit but also the intensity of the output signal of the transmitter of each air pressure sensor unit and existence or nonexistence of a shield between the receiver and each air pressure sensor unit. Therefore, it is difficult in fact to specify the tire attaching position from the intensity of the reception signal.

When the tire ID and the detection result of the air pressure are merely transmitted from the tire by wireless as in Patent Document 1, the tire attaching position can be specified only by the intensity of the reception signal on the receiving side. It is difficult in fact to specify the tire attaching position by the intensity of the reception signal as described above. That is, in the tire of Patent Document 1, it is difficult in fact for the receiving side to recognize the tire attaching position.

It is a first object of the present invention to provide a tire attaching position detection system which is capable of suppressing influence by an intensity of a reception signal from the tire side.

It is a second object of the present invention to provide a tire which is capable of suppressing influence by an intensity of a reception signal on a receiving side when the receiving side is caused to recognize the tire attaching position.

It is a third object of the present invention to provide a sensor unit for tires which is capable of suppressing influence by an intensity of a reception signal on a receiving side when the receiving side is caused to recognize the tire attaching position.

[MEANS FOR SOLVING THE PROBLEM]

A first aspect of the present invention relates to a tire attaching position detection system for vehicles. The tire attaching position detection system includes:

    a direction change detection means, mounted on each tire of a vehicle, for acquiring direction change data of each tire;
    a means for detecting number of rotations, mounted on each tire, for acquiring number of rotations data of each tire;
    a transmission means, mounted on each tire, for transmitting the direction change data of each tire and the number of rotations data of each tire; and

a position judging means for judging the attaching position of each tire in the vehicle based on the direction change data and the number of rotations data transmitted from the transmission means of each tire.

The position judging means may judge some tires as the front wheels in at least any one of the following cases (1) to (7) and judges each tire as the right wheel or the left wheel according to large or small of the number of rotations during period of turning of the vehicle:

(1) when the direction changes of the above some tires are detected before the direction changes of the other tires at the time when the vehicle changes its traveling direction;
(2) when the direction changes of the above some tires are detected and the direction changes of the other tires are not detected;
(3) when it is detected that the direction changes of the above some tires are larger than the direction changes of the other tires at the time of transition from straight traveling to curving;
(4) when the direction changes of the above some tires are linked with turning of a steering wheel of the vehicle and the direction changes of the other tires are not linked with the turning of the steering wheel;
(5) when the direction changes of the above some tires are smaller than the direction changes of the other tires between the time of the start of curving of the vehicle and the time of the end of curving;
(6) when the direction changes of the above some tires are smaller than the direction changes of the other tires between the time when the direction changes of at least the above some tires are detected after same direction state of all the tires and the time when all the tires become same direction state again after that; and
(7) when the direction changes of the above some tires coincide with the change of the traveling direction instructed by the turning of the steering wheel of the vehicle and the direction changes of the other tires do not coincide with the change of the traveling direction.

A second aspect of the present invention relates to a tire attaching position detection system for vehicles. The tire attaching position detection system includes:

a direction change detection means, mounted on each tire of a vehicle, for acquiring direction change data of each tire;
a transmission means, mounted on each tire, for transmitting the direction change data of each tire; and
a position judging means for judging whether each tire is a front wheel or rear wheel based on the direction change data transmitted from the transmission means of each tire, wherein
at a vehicle speed lower than a predetermined speed, the position judging means judges some tires as the front wheels in at least any one of the following cases (1) to (7):

(1) when the direction changes of the above some tires are detected before the direction changes of the other tires at the time when the vehicle changes its traveling direction;
(2) when the direction changes of the above some tires are detected and the direction changes of the other tires are not detected;
(3) when it is detected that the direction changes of the above some tires are larger than the direction changes of the other tires at the time of transition from straight traveling to curving;
(4) when the direction changes of the above some tires are linked with turning of a steering wheel of the vehicle and the direction changes of the other tires are not linked with the turning of the steering wheel;
(5) when the direction changes of the above some tires are smaller than the direction changes of the other tires between the time of the start of curving of the vehicle and the time of the end of curving;
(6) when the direction changes of the above some tires are smaller than the direction changes of the other tires between the time when the direction changes of at least the above some tires are detected after same direction state of all the tires and the time when all the tires become same direction state again after that; and
(7) when the direction changes of the above some tires coincide with the change of the traveling direction instructed by the turning of the steering wheel of the vehicle and the direction changes of the other tires do not coincide with the change of the traveling direction.

The direction change detection means may include a magnetic sensor capable of detecting terrestrial magnetism.
The magnetic sensor may be of a three-axis type, the first axis is parallel to a rotation axis of a tire on which the magnetic sensor is mounted, the second axis is parallel to a rotation tangent direction of a magnetic sensor mounting part, and the third axis is vertical to the first axis and the second axis.
The tire attaching position detection system may include first and second ground detection sensors mounted on each tire, wherein the first ground detection sensor is located in the vicinity of the magnetic sensor in the circumferential direction of the tire, the second ground detection sensor is located on a side opposite to the first ground detection sensor with the rotation center of the tire between them, and the position judging means judges whether the magnetic sensor is located on the front part or rear part of the tire from the detection signals of the first and second ground detection sensors, so that the position judging means detects the direction of the tire.

A third aspect of the present invention relates to a tire attaching position detection system for vehicles. The tire attaching position detection system includes:

a means for detecting number of rotations, mounted on each tire, for acquiring number of rotations data of each tire;
a transmission means, mounted on each tire, for transmitting the number of rotations data of each tire, and
a position judging means for judging whether each tire is a right wheel or left wheel based on the number of rotations data transmitted from the transmission means of each tire, wherein the position judging means judges whether each tire is a right wheel or left wheel according to large or small of the number of rotations during period of turning of the vehicle.

The means for detecting number of rotations may include a ground detection sensor.

The ground detection sensor may be a distortion sensor or acceleration sensor.

The tire attaching position detection system may include a receiver of a satellite positioning system and can judge turning direction of the vehicle from a reception signal of the receiver.

The tire attaching position detection system may includes an input means which enables a user to input turning direction of the vehicle, and recognize the turning direction of the vehicle from an input of the turning direction into the input means.

The tire attaching position detection system may includes an input means which enables a user to instruct a start of detection of a tire attaching position and a display means for displaying whether the tire attaching position is detected or not.

The tire attaching position detection system may includes a state acquisition means, mounted on each tire, for acquiring data on a state of each tire, wherein the transmission means transmits the data on the state of each tire.

A forth aspect of the present invention relates to a tire. The tire includes a magnetic sensor capable of detecting terrestrial magnetism and a transmitting part capable of transmitting an output signal of the magnetic sensor to outside by wireless.

The tire may includes a ground detection sensor, wherein the transmitting part can transmit an output signal of the ground detection sensor to the outside by wireless.

A fifth aspect of the present invention relates to a sensor unit for tires. The sensor unit includes a magnetic sensor capable of detecting terrestrial magnetism and a transmitting part capable of transmitting an output signal of the magnetic sensor to outside by wireless.

It is to be noted that any arbitrary combination of the above-described structural components as well as the expressions according to the present invention changed among a system and so forth are all effective as and encompassed by the present aspects.

[EFFECT OF THE INVENTION]

According to the first to third aspects of the present invention, there can be provided a tire attaching position detection system which is capable of suppressing influence by an intensity of a reception signal from the tire side.

According to the fourth aspect of the present invention, there can be provided a tire which is capable of suppressing influence by an intensity of a reception signal on a receiving side when the receiving side is caused to recognize the tire attaching position.

According to the fifth aspect of the present invention, there can be provided a sensor unit for tires which is capable of suppressing influence by an intensity of a reception signal on the receiving side when the receiving side is caused to recognize the tire attaching position.

BRIEF DESCRIPTION OF THE DRAWINGS

Fig. 1 is a schematic plan view of a tire attaching position detection system 1 according to an embodiment of the present invention.
Fig. 2 is a functional block diagram of the tire attaching position detection system 1.
Figs. 3 is a schematic plan view showing posture changes of tires 3 and a car body 5 when a front-wheel steering vehicle 2 travels straight, curves and travels straight sequentially.

Figs. 4 is a schematic plan view showing posture changes of tires 3 and a car body 5 when a four-wheel steering vehicle 2 travels straight, curves and travels straight sequentially.

Fig. 5 is a schematic plan view showing a difference in turning radius between inner wheels and outer wheels when the vehicle 2 curves.

Fig. 6 is a sectional view showing the position of the sensor unit 4 of the tire attaching position detection system 1.

Fig. 7 is a schematic sectional side view showing a ground contact state between a road surface 7 and a part of an outer tire surface at which right behind of a mounting part of the sensor unit 4 is positioned.

Fig. 8 is a diagram showing an example of a waveform of a sensing signal of a distortion sensor 11 of the sensor unit 4.

Fig. 9 is a schematic perspective view showing directions of x, y and z axes which are detection axes of a geomagnetic sensor 12 of the sensor unit 4.

Fig. 10 is a schematic plan view showing an angle $\theta$ formed by a traveling direction of the tire 3 with respect to north-south direction.

Fig. 11 is a graph showing a relationship between a detection result of the geomagnetic sensor 12 and the angle $\theta$.

Fig. 12 is a flowchart showing a flow of a tire attaching position detecting method which can be applied to a front-wheel steering vehicle 2.

Fig. 13 is a flowchart showing a flow of a tire attaching position detecting method which can be applied to front-wheel steering and four-wheel steering vehicles 2.

Fig. 14 is a schematic side view showing that two distortion sensors 11a and 11b are arranged at an interval of 180° in a circumferential direction of the tire 3 and the distortion sensor 11b is arranged at the same position as a geomagnetic sensor 12 in the circumferential direction of the tire 3.

Fig. 15 is a graph showing a relationship between the detection result of the geomagnetic sensor 12 and the angle $\theta$ in view of whether the geomagnetic sensor 12 is located on the front half or rear half of the tire 3 in the configuration of Fig. 14.

## EMBODIMENT FOR CARRYING OUT THE INVENTION

Preferred embodiments of the present invention will now be described in detail with reference to the drawings. The same or equivalent constituent parts, members, etc., shown in the drawings are designated by the same reference numerals and will not be repeatedly described as appropriate. The embodiments are not intended to limit the invention but are mere exemplifications, and all features or combinations thereof described in the embodiments do not necessarily represent the intrinsic natures of the invention.

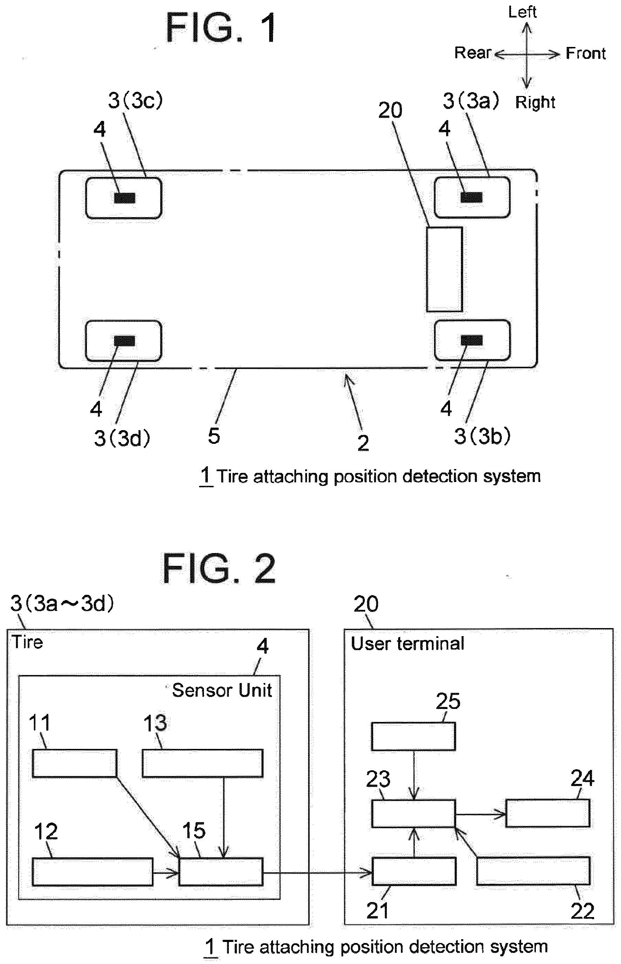

This embodiment relates to a tire attaching position detection system 1 for vehicles, a tire 3 and a tire sensor unit 4. The front, rear, right and left directions crossing each other of a vehicle 2 are defined by Fig. 1. The vehicle 2 has a car body 5 and four tires 3 attached to the car body 5. The tires 3 consist of a front left wheel 3a, a front right wheel 3b, a rear left wheel 3c and a rear right wheel 3d. When it is necessary to explain by specifying one of them, expressions "front left wheel 3a", "front right wheel 3b", "rear left wheel 3c" and "rear right wheel 3d" are used. In other cases, an expression "tire 3" is used. The vehicle 2 is a front-wheel steering (double-wheel steering) vehicle or a four-wheel steering vehicle.

The tire attaching position detection system 1 includes sensor units 4 mounted on the respective tires 3 respectively and a user terminal 20. In the tire attaching position detection system 1, the user terminal 20 communicates with the sensor unit 4 of each tire 3 to detect the attaching position of each tire 3, that is, whether the tire 3 is a front left wheel, front right wheel, rear left wheel or rear right wheel. The detection of the attaching position of each tire 3 is carried out after exchange of the tire 3 or after rotation of the tire 3 in the vehicle 2.

As shown in Fig. 2, the sensor unit 4 has a distortion sensor 11 as a means for detecting number of rotations (in other words a rotation speed detecting means), a geomagnetic sensor 12 as a direction change detection means, an air pressure sensor 13 as a state acquisition means and a transmitting part 15 as a transmission means.

The distortion sensor 11 is a thin-film piezoelectric element chip having an electrode on both sides of a piezoelectric thin film (thin-film PZT) and mounted on an unshown flexible substrate. The distortion sensor 11 acquires data on the number of rotations of the tire 3. The geomagnetic sensor 12 is an example of a magnetic sensor which can detect terrestrial magnetism and acquires data on the direction change of the tire 3. The air pressure sensor 13 acquires air pressure data which is an example of the state data of the tire 3.

The transmitting part 15 is a wireless communication module for short-range wireless communication such as Bluetooth (registered trademark). The transmitting part 15 may include a signal processing part for carrying out signal processing such as noise removal, amplifying or analog-digital conversion. The transmitting part 15 transmits the number of rotations data acquired by the distortion sensor 11, the direction change data acquired by the geomagnetic sensor 12 and the air pressure data acquired by the air pressure sensor 15 to the receiving part 21 of the user terminal 20. The transmitting part 15 may transmit the ID of the tire 3 to the receiving part 21.

The user terminal 20 may be a computer (on-vehicle computer) which constitutes a car navigation system of the vehicle 2 or a portable terminal such as smart phone or tablet terminal. The user terminal 20 has the receiving part 21, a GPS (Global Positioning System) receiver 22, a calculation part 23, a display part 24 as a display means and an input part 25 as an input means.

The receiving part 21 is a wireless communication module for short-range wireless communication such as Bluetooth (registered trademark) . The GPS receiver 22 is an example of the receiver of a satellite positioning system. The calculation part 23 includes a microcontroller which can carry out various arithmetic processing required for the detection of the attaching position of the tire 3. The display part 24 reports various information to a user by screen display. The input part 25 includes buttons etc. which accept various inputs from a user. When the display part 24 is a touch panel, the touch panel may be used as the input part 25. The user can instruct the start of the detection of the attaching position of each tire 3 with the input part 25.

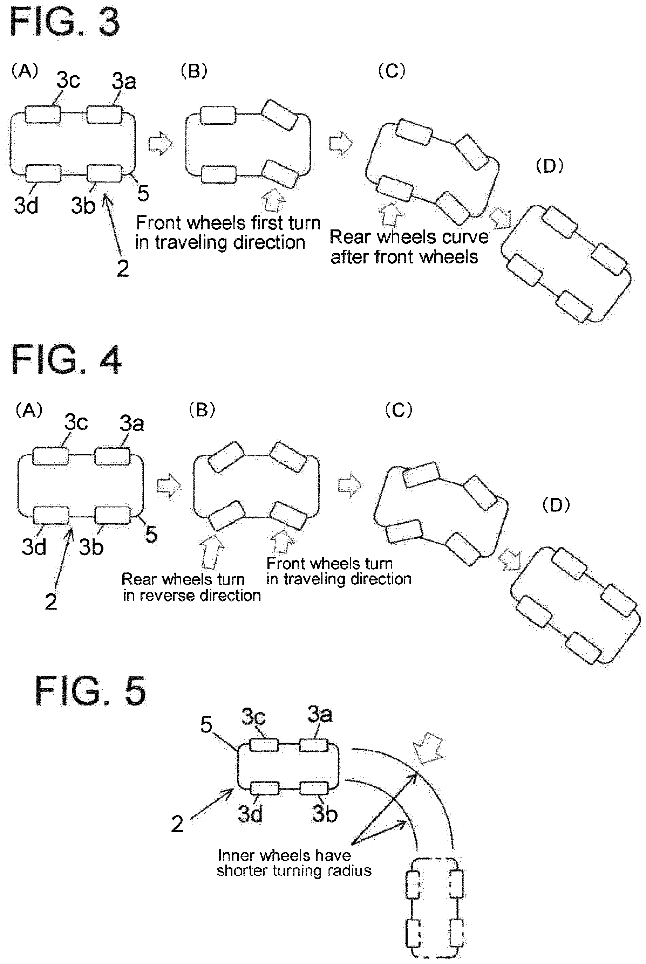

Figs. 3 is a schematic plan view showing posture changes of the tires 3 and the car body 5 when a front-wheel steering vehicle 2 travels straight, curves and travels straight sequentially. As shown in (A) of Fig. 3, when the vehicle 2 travels straight, the directions of all the tires 3 are the same (aligned). When the vehicle 2 changes from straight traveling to curving as shown in (B) of Fig. 3, the front wheels (front left wheel 3a and front right wheel 3b) first turn in the traveling direction. Thereafter, along with the curving of the vehicle 2, the rear wheels (rear left wheel 3c and rear right wheel 3d) turn after the front wheels as shown in (C) of Fig. 3. Then, when the vehicle 2 returns to straight traveling as shown in (D) of Fig. 3, the directions of all the tires 3 become the same. Between at the time of the start of curving shown in (B) of Fig. 3 and at the time of the end of curving shown in (D) Fig. 3, an amount of direction change of each of the front wheels is smaller than an amount of direction change of each of the rear wheels.

Figs. 4 is a schematic plan view showing posture changes of the tires 3 and the car body 5 when a four wheel-steering vehicle 2 travels straight, curves and travels straight sequentially. As shown in (A) of Fig. 4, when the vehicle 2 travels straight, the directions of all the tires 3 are the same. When the vehicle 2 changes from straight traveling to curving as shown in (B) of Fig. 4, the front wheels and the rear wheels change in direction in an opposite phase. That is, the front wheels turn in the traveling direction whereas the rear wheels turn in a direction opposite to the traveling direction. The vehicle 2 curves to become a state shown in (C) of Fig. 4 and then returns to straight traveling as shown in (D) of Fig. 4, the directions of all the tires 3 become the same. Between at the time of the start of curving shown in (B) of Fig. 4 and at the time of the end of curving shown in (D) of Fig. 4, the amount of direction change of each of the front wheels is smaller than the amount of direction change of each of the rear wheels.

In addition, in the case of front-wheel steering, the direction changes of the front wheels are linked with the turning of the steering wheel of the vehicle 2 whereas the direction changes of the rear wheels are not linked with the turning of the steering wheel. Further, the direction changes of the front wheels coincide with the change of the traveling direction instructed by the turning of the steering wheel of the vehicle 2 whereas the direction changes of the rear wheels do not coincide with the change of the traveling direction instructed by the turning of the steering wheel (the directions of the rear wheels do not change only by the turning of the steering wheel). In the case of four-wheeled steering, at a vehicle speed lower than a predetermined speed at which the front wheels and the rear wheels change their directions in an opposite phase, the direction changes of the front wheels coincide with the change of the traveling direction instructed by the turning of the steering wheel of the vehicle 2 whereas the direction changes of the rear wheels do not coincide with the change of the traveling direction instructed by the turning of the steering wheel (opposite to the change of the traveling direction).

In view of these, the calculation part 23 of the user terminal 20 can judge some tires 3 as the front wheels and the other tires 3 as the rear wheels based on data on the direction change of each tire 3 transmitted from the transmitting part 15 in at least any one of the following cases:

(1) when the direction changes of the above some tires 3 are detected before the direction changes of the other tires 3 at the time when the vehicle 2 changes its traveling direction;
(2) when the direction changes of the above some tires 3 are detected and the direction changes of the other tires 3 are not detected;
(3) when it is detected that the direction changes of the above some tires 3 are larger than the direction changes of the other tires 3 at the time of transition from straight traveling to curving;
(4) when the direction changes of the above some tires 3 are linked with the turning of the steering wheel of the vehicle 2 and the direction changes of the other tires 3 are not linked with the turning of the steering wheel;
(5) when the direction changes of the above some tires 3 are smaller than the direction changes of the other tires 3 between the time of the start of curving of the vehicle 2 and the time of the end of curving;
(6) when the direction changes of the above some tires 3 are smaller than the direction changes of the other tires 3 between the time when the direction changes of at least the above some tires 3 are detected after same direction state of all the tires 3 and the time when all the tires 3 become same direction state again after that; and
(7) when the direction changes of the above some tires 3 coincide with the change of the traveling direction instructed by the turning of the steering wheel of the vehicle 2 and the direction changes of the other tires 3 do not coincide with the change of the traveling direction.

The above (1) to (4) are judging conditions in the case of a front-wheel steering vehicle 2. The above (5) to (7) are judging conditions common to front-wheel steering and four-wheel steering.

Fig. 5 is a schematic plan view showing the difference in turning radius between the inner wheels and the outer wheels when the vehicle 2 curves. As obvious from Fig. 5, when the vehicle 2 turns to the right, the right wheels (front right wheel 3b and rear right wheel 3d) which are the inner wheels have the smaller curvature radius of the trajectory and a shorter moving length than the left wheels (front left wheel 3a and rear left wheel 3c) which are the outer wheels. Based on data of the number of rotations of each tire 3 transmitted from the transmitting part 15, the calculation part 23 of the user terminal 20 can derive a long and short moving length of each tire 3 during a period of turning (curving) from large and small number of rotations of each tire 3 along with the turning (curving) of the vehicle 2. Tires 3 having higher number of rotations by turning are tires 3 having a longer moving length by the turning, and the calculation part 23 can judge these tires 3 as the outer wheels at the time of turning. Tires 3 having a lower number of rotations by the turning are tires 3 having a shorter moving length by the turning, and the calculation part 23 can judge these tires 3 as the inner wheels at the time of turning.

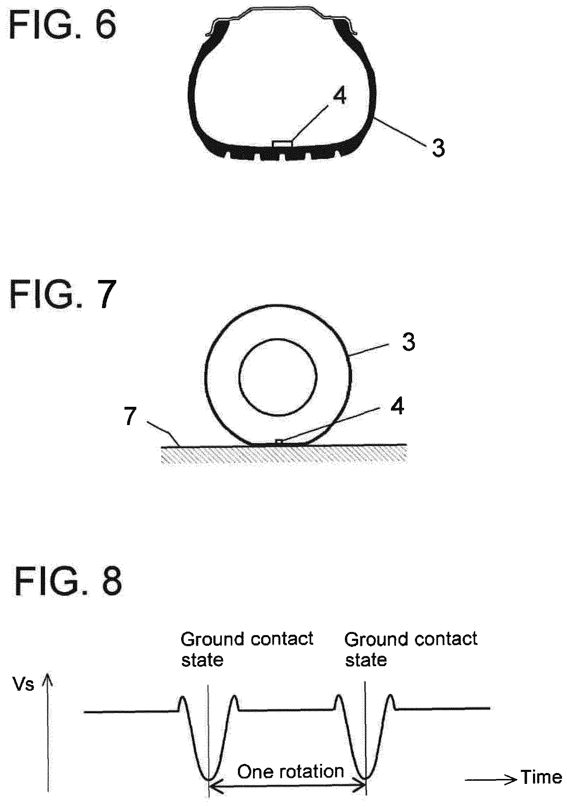

As shown in Fig. 6, the sensor unit 4 is mounted on the center part in the lateral direction of the inner wall of the tire 3. The distortion sensor 11 of the sensor unit 4 obtains a sensing signal whose level is changed before and after the ground contact state shown in Fig. 7 by the rotation of the tire 3. One example of the waveform of the sensing signal is shown in Fig. 8. As shown in Fig. 8, the waveform of the sensing signal takes a minimum value every time the ground contact state shown in Fig. 7 is obtained during the rotation of the tire 3. The tire 3 makes one revolution during a period from a certain minimum value to the next minimum value. Therefore, the number of rotations of the tire 3 during a desired period can be specified from the sensing signal. That is, the sensing signal is an example of data of number of rotations from which the number of rotations of the tire 3 can be specified.

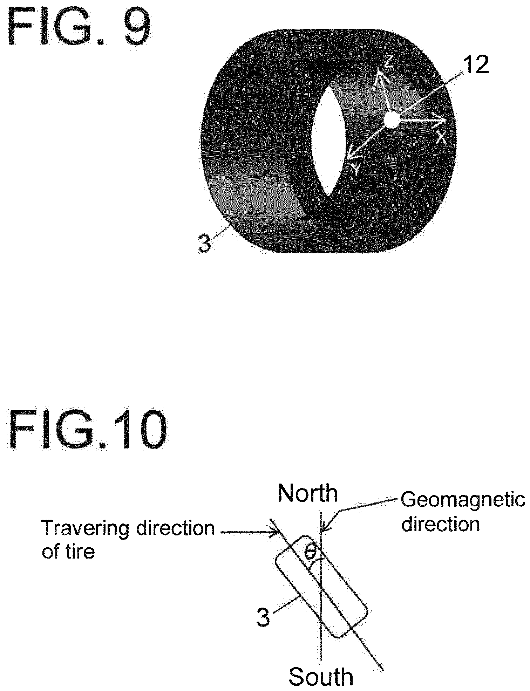

Fig. 9 is a schematic perspective view showing the directions of X, Y and Z axes which are the detection axes of the geomagnetic sensor 12 of the sensor unit 4. The geomagnetic sensor 12 is of a three-axis type. The X axis as the first axis is parallel to the rotation axis of the tire 3 (parallel to the width direction of the tire 3) on which the geomagnetic sensor 12 is mounted. The Z axis which is the second axis is vertical to the X axis and parallel to the rotation tangential direction of a geomagnetic sensor 12 mounting part. The Y axis which is the third axis is vertical to the X axis and the Z axis. The Y axis is a line connecting the geomagnetic sensor 12 and the center of the tire 3.

The measurement values of the axes of the geomagnetic sensor 12 are defined as follows.

X axis measurement value ... mx
Y axis measurement value ... my
Z axis measurement value ... mz

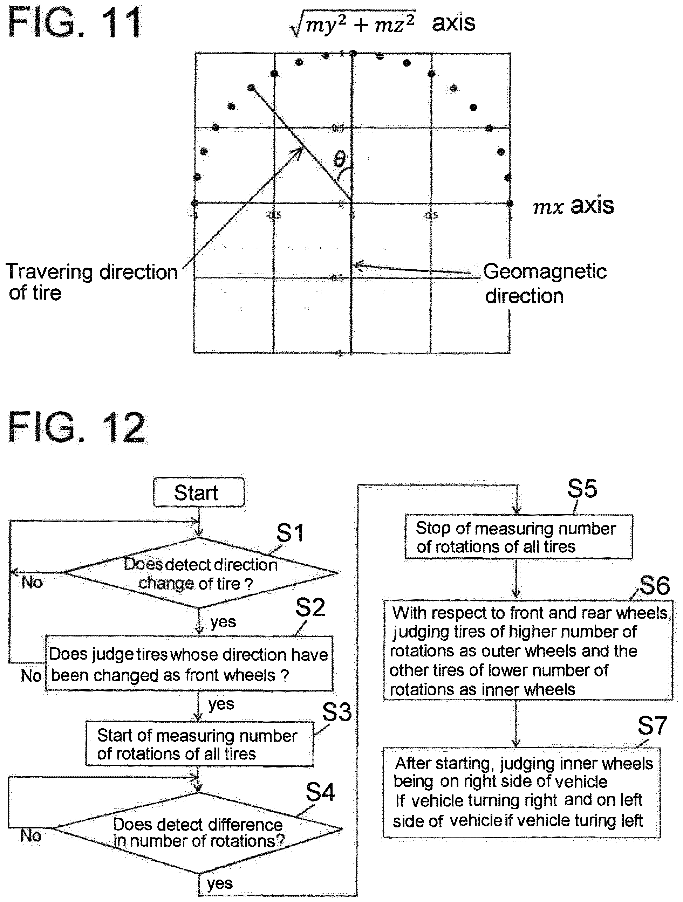

The angle θ formed by the traveling direction of the tire 3 with respect to the north-south direction is defined as shown in Fig. 10. The graph of Fig. 11 shows results obtained by plotting the formula 1 on coordinates while the angle θ is changed.

[formula 1]

$$\left(mx, \sqrt{my^2 + mz^2}\right)$$

The coordinate values shown in the formula 1 are determined by the direction of the tire 3 regardless the rotation of the tire 3. In Fig. 11, the measurement result of the geomagnetic sensor 12 in the state of Fig. 10 and the origin of the coordinates are connected by a line segment. The direction of this line segment is the detection result of the traveling direction of the tire 3. The traveling direction of the tire 3 and its change can be detected from the measurement result of the geomagnetic sensor 12.

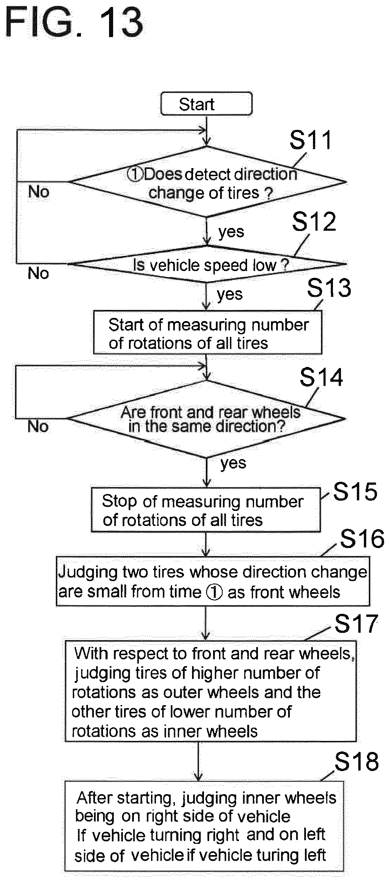

Fig. 12 and Fig. 13 show examples of the procedure of detecting the attaching position of each tire 3 in the tire attaching position detection system 1. The flowcharts of Fig. 12 and Fig. 13 show a flow of processing when the calculation part 23 runs a tire attaching position detection program. The start of these flowcharts is triggered, for example, when the input part 25 accepts an instruction to start the detection of the tire attaching position from a user.

Fig. 12 is a flowchart showing a flow of a tire attaching position detecting method which can be applied to a front-wheel steering vehicle 2. When the calculation part 23 detects the direction changes of some tires 3 based on data on the direction change of each tire 3 transmitted from the transmitting part 15 (yes of S1), it judges the tires 3 whose direction has been changed as the front wheels (S2). Prior to step S1, the calculation part 23 may instruct a user to turn the steering wheel by screen display with the display part 24 or sound generated from unshown sound output means. In this case, the turning direction of the steering wheel may be input (selected) from the input part 25.

The calculation part 23 starts to measure the number of rotations (rotation speed) of each tire 3 based on the data of number of rotations transmitted from the transmitting part 15 (S3). When the calculation part 23 detects the difference in the number of rotations among the four tires 3 (yes of S4), it stops measuring the number of rotations of each tire 3 (S5). With respect to the front and rear wheels, the calculation part 23 judges some tires 3 having higher number of rotations as the outer wheels and the other tires 3 having lower number of rotations as the inner wheels (S6). When the vehicle 2 turns to the right in the process of carrying out steps S1 to S5, the calculation part 23 judges the inner wheels as the right wheels and the outer wheels as the left wheels, and when the vehicle 2 turns to the left, the calculation part 23 judges the inner wheels as the left wheels and the outer wheels as the right wheels (S7). The calculation part 23 reports whether judgment has been made normally or not to the user by screen display with the display part 24 or by sound.

Fig. 13 is a flowchart showing a flow of a tire attaching position detecting method which can be applied to front-wheel steering and four-wheel steering vehicles 2. When the calculation part 23 detects that the directions of the tires 3 have been changed (two tires 3 and the other two tires 3 are different in direction) based on data on the direction change of each tire 3 transmitted from the transmitting part 15 (yes of S11) and the vehicle 2 has a low speed (yes of S12), the calculation part 23 starts to measure the number of rotations of each tire 3 based on the data of number of rotations transmitted from the transmitting part 15 (S13). When the calculation part 23 detects that the directions of two tires 3 differ from the directions of the other two tires 3, it can judge the start of turning. The low speed is lower than a predetermined speed that is a vehicle speed at which the front wheels and rear wheels of the four-wheeled steering vehicle 2 change in direction in an opposite phase.

The calculation part 23 stops measuring the number of rotations of each tire 3 (S15) when the directions of all the tires 3 become the same (yes of S14), that is, the vehicle 2 ends turning and returns to straight traveling (the direction change of the car body 5 ends) . The calculation part 23 judges two tires 3 whose direction changes are small from the time of step S11 as the front wheels (S16). The calculation part 23 judges some tires having higher number of rotations as the outer wheels and the other tires 3 having a lower number of rotations as the inner wheels (S17) . When the vehicle 2 turns to the right in the process of carrying out steps S11 to S15, the calculation part 23 judges the inner wheels as the right wheels and the outer wheels as the left wheels, and when the vehicle 2 turns to the left (S18) it judges the inner wheels as the left wheels and the outer wheels as the right wheels. The calculation part 23 reports whether judgement has been made normally or not to the user by screen display with the display part 24 or by sound.

The calculation part 23 can detect the turning direction of the vehicle 2 from the reception signal of the GPS receiver 22 in step S7 in Fig. 12 and step S18 in Fig. 13. Or when the user inputs the rotation direction of the steering wheel from the input part 24 in advance, the calculation part 23 may judge that the vehicle 2 turns in a direction shown by the rotation direction. Or the calculation part 23 may derive the turning direction from the difference in direction between the rear wheels and the front wheels based on data on the direction change of each tire 3 transmitted from the transmitting part 15. Or unshown steering wheel rotation position detection means may be provided, so that the calculation part 23 derives the turning direction from the rotation direction of the steering wheel.

The flowchart of Fig. 12 can be applied regardless of the forward movement or backward movement of the vehicle 2. The flowchart of Fig. 13 is based on the supposition of the forward movement of the vehicle 2. In this point, prior to step S11, the calculation part 23 may instruct the user to drive the vehicle forward by screen display with the display part 24 or by sound. Or the calculation part 23 may reverse the judgement of the front wheels and the rear wheels when the vehicle 2 moves backward.

After the detection of the attaching position of each tire 3, the calculation part 23 can detect the air pressures of the front left wheel 3a, front right wheel 3b, rear left wheel 3c and rear right wheel 3d based on the detection signals of the air pressure sensors 15 of the tires 3 and report them to the user by screen display with the display part 24 or by sound.

The following effects are obtained according to this embodiment.

(1) The user terminal 20 judges the front wheels and the rear wheels based on data on the direction change of each tire 3 received from each sensor unit 4 and judges the right wheels and the left wheels based on data of the number of rotations (rotation speed) of each tire 3 received from each sensor unit 4. Therefore, as compared with a case where the attaching position of each tire 3 is judged by the intensity of a reception signal from each sensor unit 4, influence by the intensity of a reception signal from the sensor unit 4 can be suppressed.

(2) Since the attaching position of each tire 3 is not judged by the intensity of a reception signal from each sensor unit 4, the distance of the receiving part 21 of the user terminal 20 from each tire 3 does not need to be different. Therefore, the degree of arrangement freedom of the user terminal 20 is enhanced, which is convenient for design. As the user terminal 20, a portable terminal such as smart phone or tablet terminal may be used, which is very convenient.

(3) Since the geomagnetic sensor 12 is of a three-axis type and detection axes are arranged as shown in Fig. 9, even when the geomagnetic sensor 12 is mounted on the inner wall of the rotating tire 3, the direction of the tire 3 can be advantageously detected without being influenced by the rotation of the tire 3.

(4) Since the turning direction of the vehicle 2 is detected by the reception signal of the GPS receiver 22, a GPS receiving function that many vehicles and portable terminals have can be used, which is very convenient.

(5) Since the detection signals of the distortion sensor 11 and the geomagnetic sensor 12 of the tire 3 are transmitted from the transmitting part 15 to the user terminal 20, when the user terminal 20 is caused to recognize the tire attaching position, influence by the intensity of the reception signal in the user terminal 20 can be suppressed.

(6) Since the sensor unit 4 transmits the detection signals of the distortion sensor 11 and the geomagnetic sensor 12 from the transmitting part 15 to the user terminal 20, when the user terminal 20 is caused to recognize the attaching position of the tire 3, influence by the intensity of the reception signal in the user terminal 20 can be suppressed.

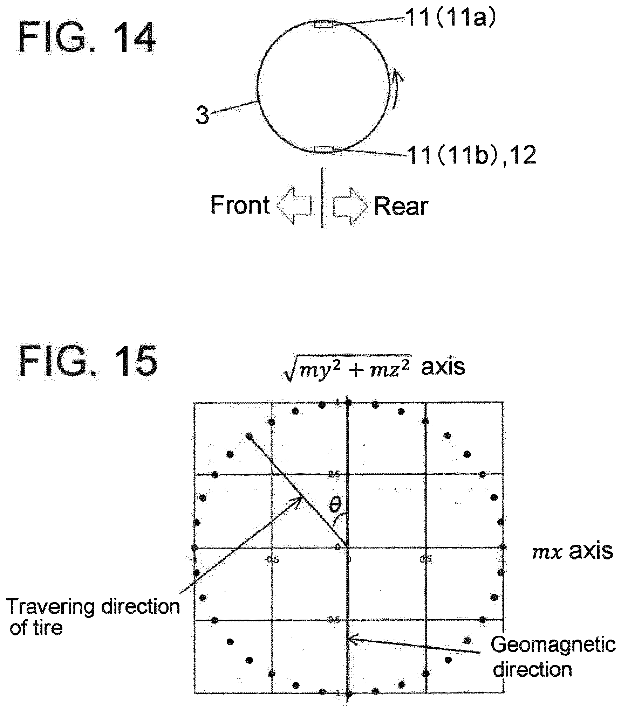

Fig. 14 is a schematic side view showing that distortion sensors 11a and 11b are arranged at an interval of 180° in the circumferential direction of the tire 3 and the distortion sensor 11b is installed at the same position as the geomagnetic sensor 12 in the circumferential direction of the tire 3.

According to the configuration of Fig. 14, the calculation part 23 of the user terminal 20 can recognize whether the geomagnetic sensor 12 is existent on the front half or latter half of the tire 3 from the output signals (same as those in Fig. 8) of the distortion sensors 11a and 11b. The calculation part 23 can reflect whether the geomatic sensor 12 is located on the front half or rear half of the tire 3 on the derivation of the direction of the tire 3 by inverting the positive/negative sign of the formula 2 every time the distortion sensors 11a and 11b detect ground contact (every time changes in the levels of the output signals of the distortion sensors 11a and 11b are detected).

[formula 2]

$$\sqrt{my^2 + mz^2}$$

Fig. 15 is a graph showing the relationship between the detection result of the geomagnetic sensor 12 and the angle θ in view of whether the geomagnetic sensor 12 is located on the front half or rear half of the tire 3 in the constitution of Fig. 14. It is possible to know the direction change of the tire 3 over 360° by reflecting whether the geomagnetic sensor 12 is located on the front half or rear half of the tire 3 through comparison between Fig. 15 and Fig. 11. When the sign of the formula 2 is inverted every time the distortion sensors 11a and 11b detect ground contact, the sign of the formula 2 is changed at the time of the forward movement of the vehicle 2 and at the time of the backward movement of the vehicle 2. In this point, there is no problem if it is determined to use the forward movement of the vehicle 2 for the detection of the attaching position of the tire 3. Even when position detection is carried out at the time of the backward movement of the vehicle 2, all the tires 3 rotate in the same direction, thereby limiting influence on position detection. Or the sign of the formula 2 may be inverted by the calculation part 23 at the time of backward movement against the time of forward movement.

When the distortion sensors 11a and 11b are provided as shown in Fig. 14, the calculation part 23 can also detect the half-rotation of the tire 3. Thus, when a plurality of distortion sensors are mounted in the circumferential direction of the tire 3, for example, at equal angular intervals, the calculation part 23 can detect less than one rotation of the tire 3.

While the invention has been described in its preferred embodiments, it is to be understood by a person having ordinary skill in the art that variations may be made on each constituent element and process of the embodiments without departing from the scope of the following claims. Variations of the invention will be described hereinafter.

The distortion sensors 11, 11a and 11b may be each substituted by an acceleration sensor, or by a ground detection sensor except for the distortion sensor and acceleration sensor. The ground detection sensor can detect that a part of the tire 3 which is a part at the same position as the ground detection sensor in the circumferential direction of the tire 3 contacts the road surface. The geomagnetic sensor 12 may be substituted by a motion sensor. The motion sensor can detect the direction change of the tire 3 as well.

The number of the tires 3 of the vehicle 2 is not limited to 4 and may be 2, 3 or another arbitrary plural number. The constituent elements of the sensor unit 4 shown in Fig. 2 are not integrated into one unit or module and may be independent and separated from one another. The state data of the tire 3 is not limited to air pressure data and may be distortion data or electric property data such as electric capacitance, parasitic resistance or dielectric loss tangent. The distortion data may be the detection signal of the distortion sensor 11. The electric capacitance, parasitic resistance or dielectric loss tangent can be derived from a result obtained when AC voltage having a predetermined frequency, for example, 1 kHz to 10 MHz is applied between two electrodes mounted on the inner wall of the tire 3.

[Explanation of Reference Numerals]

1 tire attaching position detection system, 3 tire, 3a front left wheel, 3b front right wheel, 3c rear left wheel, 3d rear right wheel, 4 sensor unit, 5 car body, 7 road surface, 11 distortion sensor, 12 geomagnetic sensor, 13 air pressure sensor, 15 transmitting part, 21 receiving part, 22 GPS receiver, 23 calculation part, 24 display part, 25 input part

**Claims**

1. A tire attaching position detection system for vehicles, comprising:

   a direction change detection means, mounted on each tire of a vehicle, for acquiring direction change data of each tire;
   a means for detecting number of rotations, mounted on each tire, for acquiring number of rotations data of each tire;
   a transmission means, mounted on each tire, for transmitting the direction change data of each tire and the number of rotations data of each tire; and
   a position judging means for judging the attaching position of each tire in the vehicle based on the direction change data and the number of rotations data transmitted from the transmission means of each tire.

2. The tire attaching position detection system according to claim 1, wherein the position judging means judges some tires as the front wheels in at least any one of the following cases (1) to (7) and judges each tire as the right wheel or the left wheel according to large or small of the number of rotations during period of turning of the vehicle:

   (1) when the direction changes of the above some tires are detected before the direction changes of the other tires at the time when the vehicle changes its traveling direction;
   (2) when the direction changes of the above some tires are detected and the direction changes of the other tires are not detected;
   (3) when it is detected that the direction changes of the above some tires are larger than the direction changes of the other tires at the time of transition from straight traveling to curving;
   (4) when the direction changes of the above some tires are linked with turning of a steering wheel of the vehicle and the direction changes of the other tires are not linked with the turning of the steering wheel;
   (5) when the direction changes of the above some tires are smaller than the direction changes of the other tires between the time of the start of curving of the vehicle and the time of the end of curving;
   (6) when the direction changes of the above some tires are smaller than the direction changes of the other tires between the time when the direction changes of at least the above some tires are detected after same direction state of all the tires and the time when all the tires become same direction state again after that; and
   (7) when the direction changes of the above some tires coincide with the change of the traveling direction instructed by the turning of the steering wheel of the vehicle and the direction changes of the other tires do not coincide with the change of the traveling direction.

3. A tire attaching position detection system for vehicles, comprising:

   a direction change detection means, mounted on each tire of a vehicle, for acquiring direction change data of each tire;
   a transmission means, mounted on each tire, for transmitting the direction change data of each tire; and
   a position judging means for judging whether each tire is a front wheel or rear wheel based on the direction change data transmitted from the transmission means of each tire, wherein
   at a vehicle speed lower than a predetermined speed, the position judging means judges some tires as the front wheels in at least any one of the following cases (1) to (7):

   (1) when the direction changes of the above some tires are detected before the direction changes of the other tires at the time when the vehicle changes its traveling direction;
   (2) when the direction changes of the above some tires are detected and the direction changes of the other tires are not detected;
   (3) when it is detected that the direction changes of the above some tires are larger than the direction changes of the other tires at the time of transition from straight traveling to curving;
   (4) when the direction changes of the above some tires are linked with turning of a steering wheel of the vehicle and the direction changes of the other tires are not linked with the turning of the steering wheel;

(5) when the direction changes of the above some tires are smaller than the direction changes of the other tires between the time of the start of curving of the vehicle and the time of the end of curving;

(6) when the direction changes of the above some tires are smaller than the direction changes of the other tires between the time when the direction changes of at least the above some tires are detected after same direction state of all the tires and the time when all the tires become same direction state again after that; and

(7) when the direction changes of the above some tires coincide with the change of the traveling direction instructed by the turning of the steering wheel of the vehicle and the direction changes of the other tires do not coincide with the change of the traveling direction.

4. The tire attaching position detection system according to any one of claims 1 to 3, wherein the direction change detection means includes a magnetic sensor capable of detecting terrestrial magnetism.

5. The tire attaching position detection system according to claim 4, wherein the magnetic sensor is of a three-axis type, the first axis is parallel to a rotation axis of a tire on which the magnetic sensor is mounted, the second axis is parallel to a rotation tangent direction of a magnetic sensor mounting part, and the third axis is vertical to the first axis and the second axis.

6. The tire attaching position detection system according to claim 5, comprising first and second ground detection sensors mounted on each tire, wherein the first ground detection sensor is located in the vicinity of the magnetic sensor in the circumferential direction of the tire, the second ground detection sensor is located on a side opposite to the first ground detection sensor with the rotation center of the tire between them, and the position judging means judges whether the magnetic sensor is located on the front part or rear part of the tire from the detection signals of the first and second ground detection sensors, so that the position judging means detects the direction of the tire.

7. A tire attaching position detection system for vehicles, comprising:

a means for detecting number of rotations, mounted on each tire, for acquiring number of rotations data of each tire;

a transmission means, mounted on each tire, for transmitting the number of rotations data of each tire, and

a position judging means for judging whether each tire is a right wheel or left wheel based on the number of rotations data transmitted from the transmission means of each tire, wherein the position judging means judges whether each tire is a right wheel or left wheel according to large or small of the number of rotations during period of turning of the vehicle.

8. The tire attaching position detection system according to claim 1 or 7, wherein the means for detecting number of rotations includes a ground detection sensor.

9. The tire attaching position detection system according to claim 6 or 8, wherein the ground detection sensor is a distortion sensor or acceleration sensor.

10. The tire attaching position detection system according to any one of claims 1 to 9, comprises a receiver of a satellite positioning system and can judge turning direction of the vehicle from a reception signal of the receiver.

11. The tire attaching position detection system according to any one of claims 1 to 9, comprising an input means which enables a user to input turning direction of the vehicle, and recognize the turning direction of the vehicle from an input of the turning direction into the input means.

12. The tire attaching position detection system according to any one of claims 1 to 11, comprising an input means which enables a user to instruct a start of detection of a tire attaching position and a display means for displaying whether the tire attaching position is detected or not.

13. The tire attaching position detection system according to any one of claims 1 to 12, comprising a state acquisition means, mounted on each tire, for acquiring data on a state of each tire, wherein the transmission means transmits the data on the state of each tire.

14. A tire comprising a magnetic sensor capable of detecting terrestrial magnetism and a transmitting part capable of transmitting an output signal of the magnetic sensor to outside by wireless.

**15.** The tire according to claim 14, comprising a ground detection sensor, wherein the transmitting part can transmit an output signal of the ground detection sensor to the outside by wireless.

**16.** A sensor unit for tires, comprising a magnetic sensor capable of detecting terrestrial magnetism and a transmitting part capable of transmitting an output signal of the magnetic sensor to outside by wireless.

# FIG. 1

Left

Rear ← → Front

Right

3(3c)
4
20
3(3a)
4

4
3(3d)
5
2
4
3(3b)

1 Tire attaching position detection system

# FIG. 2

3(3a~3d)
20

Tire
4

Sensor Unit

11
13

12
15

User terminal

25

23
24

21
22

1 Tire attaching position detection system

# FIG. 3

(A) 3c 3a
3d 3b 5
2

(B)
Front wheels first turn
in traveling direction

(C)
Rear wheels curve
after front wheels

(D)

# FIG. 4

(A) 3c 3a
3d 3b 5
2

(B)
Rear wheels turn
in reverse direction

Front wheels turn
in traveling direction

(C)

(D)

# FIG. 5

5 3c 3a
2 3d 3b

Inner wheels have
shorter turning radius

FIG. 6

FIG. 7

FIG. 8

# FIG. 9

# FIG.10

# FIG. 11

$\sqrt{my^2 + mz^2}$ axis

$mx$ axis

Travering direction of tire

Geomagnetic direction

$\theta$

# FIG. 12

Start

S1
Does detect direction change of tire ?

No

yes

S2
Does judge tires whose direction have been changed as front wheels ?

No

yes

S3
Start of measuring number of rotations of all tires

S4
Does detect difference in number of rotations?

No

yes

S5
Stop of measuring number of rotations of all tires

S6
With respect to front and rear wheels, judging tires of higher number of rotations as outer wheels and the other tires of lower number of rotations as inner wheels

S7
After starting, judging inner wheels being on right side of vehicle If vehicle turning right and on left side of vehicle if vehicle turing left

17

# FIG. 13

```
              ┌──────────────┐
              │    Start     │
              └──────┬───────┘
                     │                      S11
         ┌───────────▼───────────┐
    No   │ ①Does detect direction │
    ◄────┤     change of tires ?  │
         └───────────┬───────────┘
                     │ yes             S12
         ┌───────────▼───────────┐
    No   │   Is vehicle speed low ?
    ◄────┤
         └───────────┬───────────┘
                     │ yes          S13
         ┌───────────▼───────────┐
         │ Start of measuring number │
         │   of rotations of all tires │
         └───────────┬───────────┘
                     │                S14
         ┌───────────▼───────────┐
    No   │  Are front and rear wheels
    ◄────┤    in the same direction?
         └───────────┬───────────┘
                     │ yes
         ┌───────────▼───────────┐  S15
         │ Stop of measuring number │
         │   of rotations of all tires │
         └───────────┬───────────┘
                     │                S16
         ┌───────────▼───────────────────┐
         │ Judging two tires whose direction change │
         │ are small from time ① as front wheels │
         └───────────┬───────────────────┘
                     │                    S17
         ┌───────────▼───────────────────┐
         │ With respect to front and rear wheels, │
         │ judging tires of higher number of │
         │ rotations as outer wheels and the │
         │ other tires of lower number of │
         │ rotations as inner wheels │
         └───────────┬───────────────────┘
                     │                    S18
         ┌───────────▼───────────────────┐
         │ After starting, judging inner wheels │
         │ being on right side of vehicle │
         │ If vehicle turning right and on left │
         │ side of vehicle if vehicle turing left │
         └───────────────────────────────┘
```

FIG. 14

11(11a)

3

11(11b),12

Front ⟨⟩ | ⟨⟩ Rear

FIG. 15

$\sqrt{my^2 + mz^2}$ axis

$mx$ axis

$\theta$

Travering direction
of tire

Geomagnetic
direction

Europäisches
Patentamt

European
Patent Office

Office européen
des brevets

# EUROPEAN SEARCH REPORT

Application Number

EP 21 17 3314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/231403 A1 (BORTOLIN DINO [CA]) 16 September 2010 (2010-09-16) | 14-16 | INV. B60C23/04 B60C23/06 |
| Y | * tyre mounted earth magnetic field sensor | 3-5 | |
| A | and piezo sensor to determine left/right mounting position; paragraph [0018] - paragraph [0047]; figures 1-3 * | 1,2 | |
| | ----- | | |
| Y | KR 2012 0128431 A (-) 27 November 2012 (2012-11-27) | 3-5 | |
| A | * paragraphs [0010], [0034] - [0037]; claim 3; figures 1-10 * | 6 | |
| | ----- | | |
| X | WO 2006/085191 A1 (MELEXIS NV [BE]; LEMAN DIRK [BE]) 17 August 2006 (2006-08-17) | 7-9,13 | |
| A | * page 9, line 17 - page 10, line 19; claims 36,37; figures 1-6b * | 10-12 | |
| | ----- | | |
| X | EP 1 284 204 A2 (PHILIPS CORP INTELLECTUAL PTY [DE] ET AL.) 19 February 2003 (2003-02-19) * the whole document * | 7 | |
| | ----- | | TECHNICAL FIELDS SEARCHED (IPC) |
| X | WO 2009/070067 A1 (VOLVO LASTVAGNAR AB [SE]; CARRESJOE ERIK [SE]; HASSELBERG PER [SE]) 4 June 2009 (2009-06-04) * page 54, line 5 - page 57, line 20; figures 6,14,16,17a,17b * | 7-13 | B60C |
| | ----- | | |

The present search report has been drawn up for all claims

| Place of search | Date of completion of the search | Examiner |
|---|---|---|
| Munich | 8 September 2021 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 3314

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2021

| Patent document cited in search report | | Publication date | Patent family member(s) | | Publication date |
|---|---|---|---|---|---|
| US 2010231403 | A1 | 16-09-2010 | EP | 2408631 A2 | 25-01-2012 |
| | | | KR | 20110126758 A | 23-11-2011 |
| | | | US | 2010231403 A1 | 16-09-2010 |
| | | | WO | 2010107641 A2 | 23-09-2010 |
| KR 20120128431 | A | 27-11-2012 | NONE | | |
| WO 2006085191 | A1 | 17-08-2006 | NONE | | |
| EP 1284204 | A2 | 19-02-2003 | DE | 10140146 A1 | 27-02-2003 |
| | | | EP | 1284204 A2 | 19-02-2003 |
| | | | JP | 2003154961 A | 27-05-2003 |
| | | | US | 2003043031 A1 | 06-03-2003 |
| WO 2009070067 | A1 | 04-06-2009 | BR | PI0722238 A2 | 03-06-2014 |
| | | | CN | 101878122 A | 03-11-2010 |
| | | | EP | 2219888 A1 | 25-08-2010 |
| | | | EP | 3659830 A1 | 03-06-2020 |
| | | | US | 2010256874 A1 | 07-10-2010 |
| | | | WO | 2009070067 A1 | 04-06-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008049875 A